# EUROPEAN PATENT APPLICATION

(11) **EP 3 940 313 A1**
(43) Date of publication of application: **19.01.2022**
(21) Application number: 21185235.5
(22) Date of filing: 13.07.2021
(51) Int. Cl.: F24T 10/13, F28D 20/02

(54) **BOREHOLE HEAT EXCHANGER WITH MACRO-ENCAPSULATED PHASE CHANGE MATERIAL**

(30) Priority: 15.07.2020 PT 2020116580
(71) Applicant: Instituto Politécnico de Setúbal, 2910-761 Setúbal (PT)
(72) Inventor: Rodrigues Coelho, Luís Manuel, 2914-761 Setúbal (PT); Karytsas, Konstantinos, 11528 Athens (GR); Vrachopoulos, Michail Gr., 10561 Athens (GR); Emmerich Goldbrunner, Johann, 8074 Raaba-Grambach (AT); Bakon, Tomasz, 02-764 Warszawa (PL); Ure, Zafer, Cambridgeshire, PE7 3HS (GB); Chrysanthou, Zinon, 8011 Paphos (CY)
(74) Representative: Lourenço Martinho do Rosário, Ana Margarida

(57) **Abstract**

The present invention refers to a closed loop borehole heat exchanger (1) with macro-encapsulated phase change material PCM (4) consisting of a pipe (2), a PCM filled pipe (3), grouting material (5), an inflow (6), an outflow (7), and a borehole wall (8).

## Description

### Field of the invention

The present invention refers to closed loop borehole heat exchangers, which are applied for the exploitation of the internal thermal energy of the working fluid with which they are in contact. The closed loop borehole heat exchangers are widely installed in various geothermal applications.

### Framework of the invention

The closed loop borehole heat exchangers are used, widely, in applications to provide heating and/or cooling to domestic water in all types of buildings, greenhouses, and other candidate applications. Applications of this type of heat exchangers exist in several countries around the world, such as United States of America, Italy, New Zealand, Russia, Greece, etc. The closed loop borehole heat exchanger can be defined as: all pipes which are positioned underneath the earth's surface (i.e. in the subsurface) or are positioned in an aquatic environment (i.e., sea, lake, river, sewer etc.), where inside this fresh water or water with antifreeze circulates using circulation pump.

The closed loop borehole heat exchangers are used as "channels" of energy transfer from the subsurface to, at least, one heat pump during the heating period - winter (i.e. energy extraction process) and by means of a heat pump to the subsurface during the cooling period - summer (i.e. energy rejection process). Closed loop borehole heat exchangers are mainly implemented with two geometrical patterns: horizontal or vertical, as well as several variations of these. Regarding the installation of closed loop borehole heat exchangers having a vertical pattern, borehole drillings are initially performed and then followed by the installation and inclusion of the closed loop borehole heat exchanger within the borehole. When the borehole drilling is made in a surface with loose geological material, such as sand or soil, a coating tube is added to avoid the collapse of the geological material after the borehole drill is concluded.

On the other hand and regarding the installation of closed loop borehole heat exchangers with a horizontal pattern, their burial is made after a full or partial trench digging is initially performed, which is then followed by the installation. Similar works are implemented during the installation of closed loop borehole heat exchangers which are variants of the two above geometrical patterns. The pipes which constitute the closed loop borehole heat exchanger can either be metallic or non-metallic.

The selection of the piping material, of the geometric pattern, and of other technical data is at the discretion of the designer and is achieved by a detailed combination of, mainly, analytical data of the subsurface or of the aquatic environment where the closed loop borehole heat exchanger will be installed, as well as of the energy demand for heating and/or cooling, of the cost and life time of the closed loop borehole heat exchanger, as well as other possible partial parameters.

The selection of non-metallic pipes (e.g. thermosetting resin, polybutylene or other polymeric materials) achieves good thermal conductivity (although not as good as metallic pipes), and do not face corrosion problems. Pipelines made from these materials generally have a lifespan of over 50 years.

On the other hand, metallic pipes have higher thermal conductivity. It is noted that the major disadvantage of these pipes is the occurrence of corrosion, which occurs through the continued exposure to oxidative molecules present in the environment, and therefore their use usually becomes restrained. Also, it is worth noting that the metallic piping, which are used as standard, are manufactured of copper, carbon steel or ductile iron.

It should be emphasized that closed loop borehole heat exchangers present advantages and disadvantages. The high cost of borehole drilling and/or trench digging, the irregular change in response of geological formations in deeper depths from region to region, and the lack of required space environment around the building, are the main barriers hindering the installation of a closed loop borehole heat exchanger, either vertical or horizontal. There have been attempts to combine the advantages of both these geometric patterns. The results of these efforts are closed loop borehole heat exchangers with a spiral pattern, which in several applications have been installed in the subsurface or has been immersed in an aquatic environment (river, lake, sea, etc.).

Heat can be stored in two ways. Thermal energy is commonly stored as sensible heat such as a conventional domestic hot water tank. Recently, there has been a movement towards storing this heat as latent heat instead. Phase change materials, commonly referred to as PCMs, are products that store and release thermal energy during the processes of melting and freezing. This cycle of melting and freezing can occur countless times without degradation. This is because there is no chemical reaction involved, only physical processes.

### Background of the invention

Closed loop borehole heat exchangers are used, widely, as a way to provide heating and/or cooling of domestic water in all types of buildings, greenhouses, and other candidate applications.

Several documents referring to closed loop borehole heat exchangers were found in state of the art.

For instance, document US2018172318 refers to an "Induced groundwater flow closed loop geothermal system", or the document US2010270002 that refers to a "System and method of maximizing performance of a solid-state closed loop well heat exchanger".

Document KR20200029817 can also be referred, as it mentions a "Construction method of grout tube of geothermal exchanger".

However, no documents were found that refer to closed loop borehole heat exchangers with macro-encapsulated phase change material.

### Advantages of the invention

One of the major advantages of the invention is the fact that the introduction of PCM in the borehole heat exchanger leads to the stabilization of temperature at specific levels for a sufficient time. The result is the improvement of the performance of the borehole heat exchanger in heating and/or cooling. During the operation of the system in heating mode, the subsurface temperature around the borehole heat exchanger gradually drops; by introducing PCM in the borehole heat exchanger this drop is limited. On the other hand, during the operation of the system in cooling mode, the subsurface temperature around the borehole heat exchanger gradually increases; by introducing PCM in the borehole heat exchanger this increase is limited. This temperature drops or increases leads to the improvement of the performance of the borehole heat exchanger in heating and/or cooling.

The increase in borehole heat exchange performance contributes to an increase in the energy performance of the entire geothermal system, as well as to reduce the required length of the boreholes for the borehole heat exchanger and, consequently, to cut on installation costs.

With this invention, the characteristics mentioned in the previous paragraphs are achieved for closed loop borehole heat exchangers in horizontal, vertical, or mixed patterns, due to the design and the placement of a macro-encapsulated phase change material PCM in order to achieve better thermal exchanges with the subsurface.

### Brief description of the drawings

These and other characteristics can be easily understood by means of the attached drawings, which are to be considered as mere examples and in no way restrictive of the scope of the invention. In the drawings, and for illustrative purposes, the measurements of some of the elements may be exaggerated and not drawn to scale. The absolute and relative dimensions do not correspond to the real ratios for the embodiments of the invention.

In a preferred embodiment:

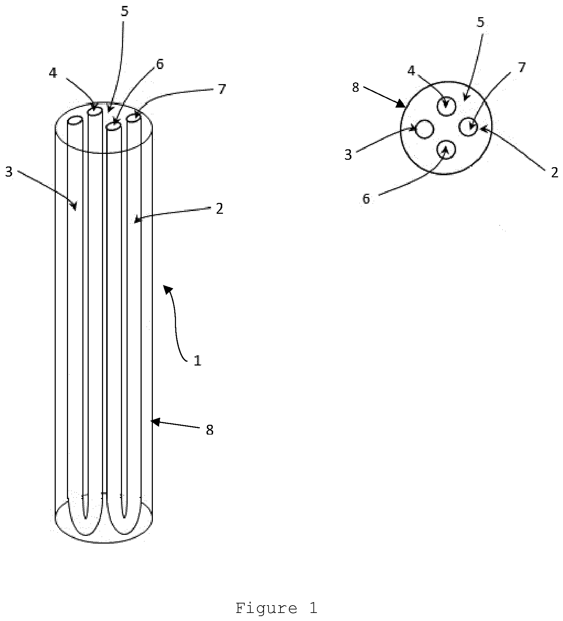

Figure 1 shows a perspective view and a top view of a closed loop borehole heat exchanger (1) with macro-encapsulated phase change material PCM (4) in a vertical pattern, which may be drilled in the ground. This figure shows: the closed loop borehole heat exchanger (1), the pipe (2), the PCM filled pipe (3), the macro-encapsulated phase change material PCM (4), the grouting material (5), the inflow (6), the outflow (7), and the borehole wall (8).

### Detailed description of the invention

By "closed loop borehole heat exchanger" is meant the equipment consisting of pipes which are positioned underneath the earth's surface (i.e. in the subsurface), connected to a heat pump or other similar equipment, for heating and/or cooling, and where inside circulates fluid medium.

By "subsurface" it is meant an area below the surface of the Earth's lithosphere.

The present invention refers to a closed loop borehole heat exchanger (1) having a higher rate of exploitation of the internal thermal energy of the working fluid, and minimizing the required length of boreholes as well as their installation cost.

Making reference to the figures, the present invention refers to a closed loop borehole heat exchanger (1) with macro-encapsulated phase change material PCM (4), which presents many advantages. On the basis of the design and the placement of macro-encapsulated phase change material PCM (4) and due to computational fluid dynamics (CFD) calculations, the exploitation of the energy in the subsurface is optimal.

Therefore, higher thermal extraction and/or rejection from or to the subsurface is achieved by the placement of macro-encapsulated phase change material PCM (4). Additionally, with the placement of macro-encapsulated phase change material PCM (4), the required length of boreholes as well as their installation cost are reduced substantially.

### Example

As illustrated in figure 1, the closed loop borehole heat exchanger (1) with macro-encapsulated phase change material PCM (4) in vertical pattern comprises at least one pipe (2) in a U-shape and at least one PCM filled pipe (3) in a U-shape of specific dimensions (length, nominal diameter and internal diameter), which are calculated after energy calculations and on the basis of thermal energy and heating and/or cooling demands towards air conditioned (heating and cooling) buildings, greenhouses, and/or other candidate applications.

The material of the pipe (2) and of the PCM filled pipe (3) can be metallic or non-metallic, being the metallic pipes manufactured of, namely, but not exclusively, copper, carbon steel or ductile iron, and the non-metallic pipes manufactured of, namely, but not exclusively, thermosetting resin, polybutylene or non-metallic, polymeric materials.

Within the pipe (2) circulates fluid medium, being namely, but not exclusively, fresh water or water with antifreeze, in forced circulation. The closed loop borehole heat exchanger (1) with macro-encapsulated phase change material PCM (4) contains grouting material (5) in the spaces formed between the pipe (2), the PCM filled pipe (3) and the borehole wall (8). As such, the pipe (2) and the PCM filled pipe (3) will be surrounded by grouting material (5). The borehole wall (8) can be either non-loose geological material, such as a crystalline basement, or by a coating tube added during the borehole drilling step that precedes the installation of the closed loop borehole heat exchanger (1) .

The beginning and the end of the pipe (2) of the closed loop borehole heat exchanger (1) with macro-encapsulated phase change material PCM (4) operates respectively as inflow (6) and outflow (7) for the fluid medium which circulates therein. The macro-encapsulated phase change material PCM (4) has been filled in to the PCM filled pipe (3). The material that is placed in the specific borehole heat exchanger of the macro-encapsulated phase change material PCM (4) correspond to any type of solid-liquid phase change material, including but not limited to organic materials, such as paraffin.

## Claims

1. Closed loop borehole heat exchanger (1)
- comprising at least one pipe (2) with an inflow (6) and an outflow (7) where a fluid medium circulates therein; and
- being filled with a grouting material (5); **characterised by** additionally comprising:
- at least one PCM filled pipe (3); and
- a macro-encapsulated phase change material PCM (4); being the macro-encapsulated phase change material PCM (4) filled into the PCM filled pipe (3).

2. Closed loop borehole heat exchanger (1) according to the preceding claim, wherein the fluid medium is selected from fresh water or water with antifreeze.

3. Closed loop borehole heat exchanger (1) according to any of the preceding claims, wherein the macro-encapsulated phase change material PCM (4) is a solid-liquid phase change material.

4. Closed loop borehole heat exchanger (1) according to any of the preceding claims, wherein the macro-encapsulated phase change material PCM (4) is paraffin.

5. Closed loop borehole heat exchanger (1) according to any of the preceding claims, wherein the inflow (6) and the outflow (7) are respectively the beginning and the end of the pipe (2).

6. Closed loop borehole heat exchanger (1) according to any of the preceding claims, wherein the pipe (2) has a U-shape.

7. Closed loop borehole heat exchanger (1) according to any of the preceding claims, wherein the PCM filled pipe (3) has a U-shape.

8. Closed loop borehole heat exchanger (1) according to any of the preceding claims, wherein the grouting material (5) surrounds the at least one pipe (2) and the least one PCM filled pipe (3).

9. Closed loop borehole heat exchange (1) according to any of the preceding claims, wherein the material of the pipe (2) and of the PCM filled pipe (3) is metallic or non-metallic, being the metallic pipes manufactured from copper, carbon steel or ductile iron, and the non-metallic pipes manufactured from thermosetting resin, polybutylene or polymeric materials.
